# EUROPEAN PATENT APPLICATION

(11) **EP 4 772 252 A1**
(43) Date of publication of application: **08.07.2026**
(21) Application number: 24918986.1
(22) Date of filing: 16.12.2024
(51) Int. Cl.: A63B 24/00, G06N 20/00

(54) **ELECTRONIC DEVICE FOR ESTIMATING POSTURE AND CONTROL METHOD THEREFOR**

(30) Priority: 16.01.2024 KR 20240006706; 12.03.2024 KR 20240034605
(71) Applicant: Samsung Electronics Co., Ltd., Suwon-si, Gyeonggi-do 16677 (KR)
(72) Inventor: KIM, Hongyoon, Suwon-si Gyeonggi-do 16677 (KR); KIM, Taeeun, Suwon-si Gyeonggi-do 16677 (KR); AGRAWAL, Hardik, Suwon-si Gyeonggi-do 16677 (KR); YUN, Jihwan, Suwon-si Gyeonggi-do 16677 (KR); YI, Sungmin, Suwon-si Gyeonggi-do 16677 (KR); CHOE, Byeongjin, Suwon-si Gyeonggi-do 16677 (KR)
(74) Representative: Gulde & Partner
(86) International application number: PCT/KR2024/020427
(87) International publication number: WO 2025/154962

(57) **Abstract**

This method for controlling an electronic apparatus comprises the steps of: acquiring a plurality of pieces of sensing data acquired from a plurality of sensors while a user moves; acquiring a plurality of embedding vectors by embedding the plurality of pieces of sensing data at a plurality of time intervals; estimating the posture of the user on the basis of correlations among the plurality of embedding vectors; and guiding the motion of the user on the basis of the estimated posture of the user.

## Description

### [TECHNICAL FIELD]

Apparatuses and methods consistent with the disclosure relate to an electronic apparatus and a control method therefor, and more particularly, to an electronic apparatus capable of estimating a posture of a user and guiding the posture of the user, and a control method therefor.

### [Background Art]

Existing exercise recommendation systems monitor a user's heart rate and suggest exercise duration, a route, and a target walking speed so as to maintain an optimal heart rate.

In particular, for exercises recommended for older adults, such as walking, the importance of stability and proper walking posture is increasing.

There is a growing need to analyze a user's posture and exercise intensity during physical activity in order to provide personalized exercise recommendations.

### [Disclosure of Invention]

### [Solution to Problem]

In accordance with an aspect of the disclosure, a control method of an electronic apparatus includes acquiring a plurality of pieces of sensing data acquired from a plurality of sensors while a user moves, acquiring a plurality of embedding vectors by embedding the plurality of pieces of sensing data at a plurality of time intervals, estimating a posture of the user based on correlations among the plurality of embedding vectors, and guiding a motion of the user based on the estimated posture of the user.

In the estimating of the posture of the user, the posture of the user may be estimated using at least one embedding vector, among the plurality of embedding vectors, having a value indicating a degree of correlation with the posture of the user being greater than or equal to a preset value.

Among the plurality of embedding vectors, a first embedding vector may correspond to a first time interval, and a second embedding vector may correspond to a second time interval different from the first time interval.

The control method may further include training an attention layer to learn the correlation between the piece of sensing data acquired from the plurality of sensors.

Each of the plurality of pieces of sensing data may correspond to a plurality of domains, and the control method may further include acquiring correlations between embedding vectors belonging to the same domain among the plurality of domains, and acquiring a correlation between embedding vectors belonging to different domains among the plurality of domains.

The control method may further include determining whether the plurality of pieces of sensing data satisfy a preset condition, and estimating the posture of the user corresponding to the condition when the plurality of pieces of sensing data satisfy the preset condition.

In the guiding of the motion of the user, the estimated posture of the user may compare with reference data to guide the motion of the user, and the reference data may be determined based on an age and gender of the user.

Each of the plurality of sensors may sense the plurality of pieces of sensing data at a different sampling rate.

The plurality of sensors may be acceleration sensor.

In accordance with another aspect of the disclosure, an electronic apparatus includes a sensor detecting a motion of the electronic apparatus, a communication interface, a memory, and a processor, in which the processor is configured to acquire a plurality of pieces of sensing data acquired from a plurality of sensors including the sensor while a user moves, acquire a plurality of embedding vectors by embedding the plurality of pieces of sensing data at a plurality of time intervals, estimate a posture of the user based on correlations among the plurality of embedding vectors, and guide a motion of the user based on the estimated posture of the user.

The processor may be configured to estimate the posture of the user using at least one embedding vector, among the plurality of embedding vectors, having a value indicating a degree of correlation with the posture of the user being greater than or equal to a preset value.

Among the plurality of embedding vectors, a first embedding vector may correspond to a first time interval, and a second embedding vector may correspond to a second time interval different from the first time interval.

The processor may be configured to train an artificial intelligence model to learn a correlation between the pieces of sensing data acquired from the plurality of sensors.

Each of the plurality of pieces of sensing data may correspond to a plurality of domains, and the processor may be configured to acquire a correlation between embedding vectors belonging to the same domain among the plurality of domains, and acquire a correlation between embedding vectors belonging to different domains among the plurality of domains.

The processor may be configured to determine whether the plurality of pieces of sensing data satisfy a preset condition, and estimate the posture of the user corresponding to the condition when the plurality of pieces of sensing data satisfy the preset condition.

The processor may guide the user's motion by comparing the estimated user's posture with reference data, and the reference data may be determined based on an age and gender of the user.

Each of the plurality of sensors may sense the plurality of pieces of sensing data at a different sampling rate.

The plurality of sensors may be an acceleration sensor.

In accordance with still another aspect of the disclosure, a non-transitory computer-readable recording medium including a program for executing a control method of an electronic apparatus includes acquiring a plurality of pieces of sensing data acquired from a plurality of sensors while a user moves, acquiring a plurality of embedding vectors by embedding the plurality of pieces of sensing data at a plurality of time intervals, estimating a posture of the user based on correlations among the plurality of embedding vectors, and guiding a motion of the user based on the estimated posture of the user.

In the estimating of the posture of the user, the posture of the user may be estimated using at least one embedding vector, among the plurality of embedding vectors, having a value indicating a degree of correlation with the posture of the user being greater than or equal to a preset value.

### [Brief Description of Drawings]

FIG. 1 is a diagram for describing a user's posture guide system according to one or more embodiments of the present disclosure.
FIG. 2 is a block diagram for describing a configuration of an electronic apparatus according to one or more embodiments of the present disclosure.
FIG. 3 is a diagram for describing a structure of an artificial intelligence (AI) model according to one or more embodiments of the present disclosure.
FIG. 4 is a diagram for describing an embedding layer and a first attention layer of the AI model according to one or more embodiments of the present disclosure.
FIG. 5 is a diagram for describing a correlation between embedding vectors according to one or more embodiments of the present disclosure.
FIG. 6 is a diagram for describing a second attention layer of the AI model according to one or more embodiments of the present disclosure.
FIG. 7 is a diagram for describing the correlation between the embedding vectors according to one or more embodiments of the present disclosure.
FIG. 8 is a diagram for describing the correlation between the embedding vectors according to one or more embodiments of the present disclosure.
FIG. 9 is a flowchart for describing a method for an electronic apparatus to train an AI model according to one or more embodiments of the present disclosure.
FIGS. 10 and 11 are diagrams for describing a second AI model according to one or more embodiments of the present disclosure.
FIG. 12 is a flowchart for describing a method for an electronic apparatus to guide a user's posture using an AI model according to one or more embodiments of the present disclosure.
FIG. 13 is a diagram for describing a method for an electronic apparatus to guide a user's posture according to one or more embodiments of the present disclosure.
FIG. 14 is a flowchart for describing a method for an electronic apparatus to estimate a user's posture based on whether acquired sensing data satisfies a condition according to one or more embodiments of the present disclosure.
FIG. 15 is a flowchart for describing a control method of an electronic apparatus according to one or more embodiments of the present disclosure.

### [Mode for Invention]

Since the disclosure may be variously modified and have several exemplary embodiments, specific exemplary embodiments of the disclosure will be illustrated in the drawings and be described in detail in the detailed description. However, it is to be understood that the disclosure are not limited to specific embodiments, but include all modifications, equivalents, and substitutions according to exemplary embodiments of the disclosure. Throughout the accompanying drawings, similar components will be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following embodiments may be modified in several different forms, and the scope and spirit of the disclosure are not limited to the following embodiments. Rather, these embodiments make the disclosure thorough and complete, and are provided to completely transfer the spirit of the disclosure to those skilled in the art.

Terms used in the disclosure are used only to describe specific embodiments rather than limiting the scope of the disclosure. Singular expressions are intended to include plural expressions unless the context clearly represents otherwise.

In the present disclosure, an expression "have," "may have," "include," "may include," or the like, indicates existence of a corresponding feature (for example, a numerical value, a function, an operation, a component such as a part, or the like), and does not exclude existence of an additional feature.

In the present disclosure, an expression "A or B," "at least one of A and/or B," "one or more of A and/or B," or the like, may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

Expressions "first," "second," "1st" or "2nd" or the like, used in the present disclosure may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

On the other hand, when it is mentioned that any component (for example, a first component) is "directly coupled" or "directly connected" to another component (for example, a second component), it is to be understood that the other component (for example, a third component) is not present between any component and another component.

An expression "configured (or set) to" used in the disclosure may be replaced by an expression "suitable for," "having the capacity to," "designed to," "adapted to," "made to, or "capable of" depending on a situation. A term "~configured (or set) to" may not necessarily mean "specifically designed to" in hardware.

Instead, an expression "~an apparatus configured to" may mean that the apparatus "is capable of" together with other apparatuses or components. For example, a "processor configured (or set) to perform A, B, and C" may mean a dedicated processor 170 for performing the corresponding operations or a generic-purpose processor 170 (for example, a CPU or an application processor) that may perform the corresponding operations by executing one or more software programs stored in a memory apparatus.

In an embodiment, a "module" or a "unit" may perform at least one function or operation, and be implemented by hardware or software or be implemented by a combination of hardware and software. In addition, a plurality of "modules" or a plurality of "~ers/ors" may be integrated in at least one module and be implemented by at least one processor except for a 'module' or an '~er/or' that needs to be implemented by specific hardware.

Meanwhile, various elements and regions in the drawings are schematically illustrated. Therefore, the spirit of the disclosure is not limited by relatively sizes or intervals illustrated in the accompanying drawings.

Hereinafter, embodiments of the disclosure will be described in detail with reference to the accompanying drawings so that those skilled in the art to which the disclosure pertains may easily practice the disclosure.

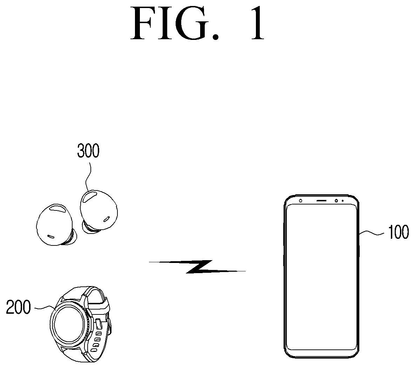

FIG. 1 is a diagram for describing a user's posture guide system according to one or more embodiments of the present disclosure.

A user's posture guide system 1 according to one or more embodiments of the present disclosure may include an electronic apparatus 100, a first external apparatus 200, and a second external apparatus 300.

According to one or more embodiments of the present disclosure, the electronic apparatus 100 may be a smartphone, the first external apparatus 200 may be a smartwatch, and the second external apparatus 300 may be earphones, but is not limited thereto. The electronic apparatus 100, the first external apparatus 200, and the second external apparatus 300 may be implemented as various types of apparatuses.

Each of the electronic apparatus 100, the first external apparatus 200, and the second external apparatus 300 may include a first sensor, a second sensor, and a third sensor for detecting a motion of the apparatus. The sensors included in each of the apparatuses 100, 200, and 300 may detect the motion of the apparatuses 100, 200, and 300 while the user is carrying the apparatuses 100, 200, and 300 and moving (e.g., while the user is walking).

In the present disclosure, the motion of the apparatus may correspond to a specific body motion of a user. For example, when the electronic apparatus 100 is a smartphone located in a user's pants pocket, the motion of the electronic apparatus 100 may indicate the motion of one of user's legs. When the first external apparatus 200 is a smartwatch worn on a user's left arm, the motion of the first external apparatus 200 may indicate the motion of the user's left arm. When the second external apparatus 300 is earphones worn on both ears of a user, the motion of the second external apparatus 300 may indicate the motion of both ears of the user. That is, in the present disclosure, the "motion of the apparatus" may be replaced with "user's motion."

In the present disclosure, the sensor for detecting the motion of the apparatuses 100, 200, and 300 may be an inertial measurement unit (IMU) sensor. Here, the inertial measurement unit may include at least one of an acceleration sensor, a gyroscope sensor, and a geomagnetic sensor. The inertial measurement unit may include a three-axis accelerometer and/or a three-axis gyrometer. The sensor for detecting the motion of the apparatuses 100, 200, and 300 is not limited to the inertial measurement unit and may be implemented as various types of sensors for detecting the motion of the apparatuses 100, 200, and 300.

In addition, at least one of the electronic apparatus 100, the first external apparatus 200, and the second external apparatus 300 may include a heart rate sensor for detecting a user's heart rate. For example, the first external apparatus 200 implemented as a smartwatch may include a fourth sensor for detecting the user's heart rate.

In the present disclosure, the heart rate sensor may detect a biosignal generated by the user's heartbeat and convert the detected biosignal into an electrical signal. The heart rate sensor may detect changes in blood flow due to the heartbeat using optical, electrical, or mechanical sensing methods. In the present disclosure, the heart rate sensor may be a photoplethysmogram (PPG) sensor, but is not limited thereto, and may be implemented as various types of sensors for detecting the user's heart rate.

The electronic apparatus 100 may sense the motion of the electronic apparatus 100 through the first sensor and receive first sensing data.

Furthermore, the electronic apparatus 100 may receive second sensing data from the first external apparatus 200 that detects the motion of the first external apparatus 200 through the second sensor.

Furthermore, the electronic apparatus 100 may receive third sensing data from the second external apparatus 300 that detects the motion of the second external apparatus 300 through the third sensor.

Furthermore, the electronic apparatus 100 may receive fourth sensing data from the first external apparatus 200 that detects the user's heart rate.

That is, the electronic apparatus 100 may acquire a plurality of pieces of sensing data sensed by a plurality of sensors.

In the present disclosure, the plurality of pieces of sensing data may be time-series data.

Furthermore, each of the plurality of sensors may acquire sensing data at a different sampling rate.

For example, the electronic apparatus 100 may acquire first sensing data by detecting the motion of the electronic apparatus 100 at a 50 Hz sampling rate. The first external apparatus 200 may acquire second sensing data by detecting the motion of the first external apparatus 200 at a 100 Hz sampling rate. The second external apparatus 300 may acquire third sensing data by detecting the motion of the second external apparatus 300 at a 150Hz sampling rate. Furthermore, the first external apparatus 200 may detect the user's heart rate at a 120 Hz sampling rate to acquire fourth sensing data.

The electronic apparatus 100 according to the present disclosure may estimate the user's posture using the plurality of pieces of sensing data acquired.

In addition, the electronic apparatus 100 according to the present disclosure may estimate the user's heart rate by using the sensing data that detects the user's heart rate.

In addition, the electronic apparatus 100 according to the present disclosure may more accurately estimate the user's heart rate by using the sensing data that detects the user's heart rate and the plurality of pieces of sensing data that detect the user's motion. In the present disclosure, the user's posture may refer to positions of user's major joints (elbows, shoulders, knees, or neck), user's gait evaluation metrics, a user's posture state, a user's motion state, or a user's gait state, but is not limited thereto.

According to one or more embodiments of the present disclosure, the electronic apparatus 100 may acquire the positions of the user's major joints by inputting the plurality of pieces of sensing data to an artificial intelligence (AI) model 111. In addition, the electronic apparatus 100 may acquire the user's gait evaluation metrics by using the positions of the user's major joints.

Alternatively, the electronic apparatus 100 may input the plurality of pieces of sensing data to the AI model 111 to acquire a user's gait evaluation metrics.

In the present disclosure, the gait evaluation metrics may include at least one of walking symmetry, arm swing magnitude, stride time, stance time, swing time, step time, stride length, step length, gait speed, and gait variability. Based on the estimated user's posture, the electronic apparatus 100 may provide information guiding the user's posture or motion. Furthermore, based on the estimated user's posture and the user's heart rate, the electronic apparatus 100 may provide the information guiding the user's posture or motion.

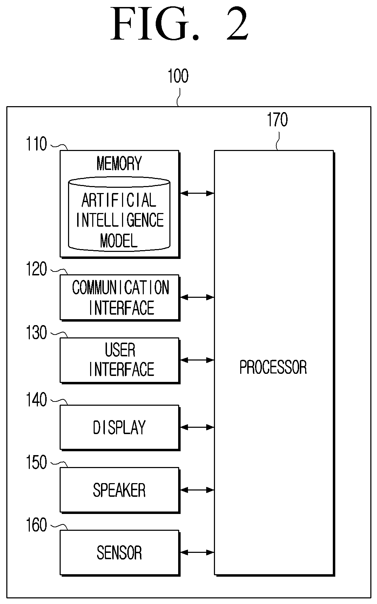

FIG. 2 is a block diagram for describing a configuration of the electronic apparatus 100 according to one or more embodiments of the present disclosure.

Referring to FIG. 2, the electronic apparatus 100 may include at least one of a memory 110, a communication interface 120, a user interface 130, a display 140, a speaker 150, a sensor 160, and a processor 170. Some of the above components may be omitted, and the electronic apparatus 100 may further include other components in addition to the above components. For example, components other than the memory 110, the communication interface 120, and the processor 170 may be omitted.

As described above, the electronic apparatus 100 may be implemented as a smartphone, but this is merely one example, and the electronic apparatus 100 may be implemented in various forms, such as a server, a TV, a smart TV, a set-top box, a mobile phone, a personal digital assistant (PDA), a laptop, a media player, an e-book reader, a digital broadcasting terminal, a navigation system, a kiosk, an MP3 player, a wearable device, home appliances, and other mobile or non-mobile computing devices.

The memory 110 may store at least one instruction related to the electronic apparatus 100. The memory 110 may store an operating system (O/S) for driving the electronic apparatus 100. In addition, the memory 110 may store various software programs or applications for operating the electronic device 100 according to various embodiments of the present disclosure. The memory 110 may include a semiconductor memory such as a flash memory 110, or a magnetic storage medium such as a hard disk, or the like.

Specifically, various software modules for operating the electronic device 100 according to various embodiments of the present disclosure may be stored in the memory 110, and the processor 170 may execute various software modules stored in the memory 110 to control the operation of the computing device 100. That is, the memory 110 is accessed by the processor 170, and readout/recording/correction/deletion/update, and the like, of data in the memory 110 may be performed by the processor 170.

Meanwhile, in the present disclosure, the term 'memory 110' may be used as meaning including the memory 110, a read only memory (ROM) (not illustrated) in the processor 170, a random access memory (RAM) (not illustrated), or a memory card (not illustrated) (for example, a micro secure digital (SD) card or a memory stick) mounted in the electronic apparatus 100.

According to one or more embodiments of the present disclosure, the memory 110 may store an AI model 111. In the present disclosure, the AI model 111 may be a model that estimates a user's motion when the sensing data sensing the motion of the apparatus carried by the user is input.

According to one or more embodiments of the present disclosure, the memory 110 may store information on a user. In this case, the information on the user may include at least one of the user's age, gender, height, weight, body fat percentage, and BMI.

The communication interface 120 includes circuitry and is configured to communicate with external apparatuses and servers. The communication interface 120 may communicate with the external apparatuses or the servers using wired or wireless communication methods. The communication interface 120 may include a Bluetooth module (not illustrated), a Wi-Fi module (not illustrated), an infrared (IR) module, a local area network (LAN) module, an Ethernet module, and the like. Here, each communication module may be implemented in the form of at least one hardware chip. Wireless communication modules may include at least one communication chip performing communication according to various wireless communication standards such as Zigbee, universal serial bus (USB), mobile industry processor interface camera serial interface (MIPI CSI), 3^{rd} generation (3G), 3^{rd} generation partnership project (3GPP), long term evolution (LTE), LTE advanced (LTE-A), 4^{th} generation (4G), 5^{th} generation (5G), and the like, in addition to the communication manner described above. However, this is merely an example, and the communication interface 120 may utilize at least one communication module among various communication modules.

According to one or more embodiments of the present disclosure, the communication interface 120 may receive the sensing data from the external apparatus.

According to one or more embodiments of the present disclosure, the communication interface 120 may receive the sensing data sensing the motion of the external apparatus from an external apparatus including a sensor capable of detecting the motion of the external apparatus.

The sensing data may be the sensing data sensing the motion of the apparatus.

According to one or more embodiments of the present disclosure, the communication interface 120 may receive the sensing data sensing the user's heart rate from the external apparatus including the sensor capable of sensing the user's heart rate.

The user interface 130 may be implemented as a device such as a button, a touch pad, a mouse, and a keyboard, or may be implemented as a touch screen capable of performing the above-described display function and manipulation input function together. Here, the button may be various types of buttons such as a mechanical button, a touch pad, a wheel, and the like, formed in any region such as a front surface portion, a side surface portion, a rear surface portion, and the like, of a body appearance of the electronic apparatus 100.

According to one or more embodiments of the present disclosure, the user interface 130 may acquire user input for inputting the information on the user.

The display 140 may be implemented by various types of displays such as a liquid crystal display (LCD), an organic light emitting diode (OLED) display, a plasma display panel (PDP), and the like. A driving circuit, a backlight unit, and the like, that may be implemented in a form such as an amorphous silicon thin film transistor (a-si TFT), a low temperature poly silicon (LTPS) TFT, an organic TFT (OTFT), and the like, may be included in the display 140. Meanwhile, the display 140 may be implemented as a touch screen combined with a touch sensor, a flexible display 140, a 3D display 140, etc. In addition, according to an embodiment of the present disclosure, the display 140 may include not only a display panel that outputs an image, but also a bezel that houses the display panel. In particular, according to an embodiment of the present disclosure, the bezel may include a touch sensor for detecting user interaction.

According to one or more embodiments of the present disclosure, the display 140 may display information regarding a user's posture, information for guiding the user's posture, or information for guiding the user's motion.

The speaker 150 is a component for outputting audio signals. In particular, the speaker 150 may include an audio output mixer, an audio signal processor, and an acoustic output module. The audio output mixer may synthesize multiple audio signals to be output into at least one audio signal. For example, the audio output mixer may synthesize an analog audio signal and another analog audio signal (e.g., an analog audio signal received from an external source) into at least one analog audio signal. The acoustic output module may include a speaker or an output terminal.

According to one or more embodiments of the present disclosure, the speaker 150 may output audio about the user's posture, audio for guiding the user's posture, or audio for guiding the user's motion.

The sensor 160 may include a sensor for sensing the motion of the electronic apparatus 100. The sensor 160 may include an acceleration sensor, a gyroscope sensor, or a geomagnetic sensor. The sensor 160 may sense the linear acceleration, rotation, and angular velocity of the apparatus.

The sensor 160 may include a sensor for sensing the user's heart rate. The sensor 160 may include a heart rate sensor or a PPG sensor. The sensor 160 may sense the user's heart rate using an optical signal or an electrical signal.

Meanwhile, the sensor 160 according to the present disclosure may be included in the first external apparatus 200 or the second external apparatus 300 in addition to the electronic apparatus 100.

The processor 170 may control the overall operation and functions of the electronic apparatus 100. Specifically, the processor 170 is connected to the configuration of the electronic apparatus 100, which includes the memory 110, and may control the overall operation of the electronic apparatus 100 by executing at least one instruction stored in the memory 110 as described above.

The processor 170 may be implemented in various schemes. For example, the processor 170 may be implemented as at least one of an application specific integrated circuit (ASIC), a logic integrated circuit, an embedded processor, a microcomputer (Micom), a microprocessor, hardware control logic, a hardware finite state machine (FSM), and a digital signal processor 170.

In particular, the processor 170 may include one or more processors. Specifically, one or more processors may include one or more of a central processing unit (CPU), a graphics processing unit (GPU), an accelerated processing unit (APU), a many integrated core (MIC), a digital signal processor (DSP), a neural processing unit (NPU), a main processing unit (MPU), a hardware accelerator, or a machine learning accelerator. One or more processors may control one or any combination of other components of the electronic apparatus and may perform operations related to communication or data processing. One or more processors may execute one or more programs or instructions stored in a memory. For example, one or more processors may perform a method according to one embodiment of the present disclosure by executing one or more instructions stored in the memory.

When the method according to one or more embodiments of the present disclosure includes multiple operations, the multiple operations may be performed by one processor or by multiple processors. That is, when a first operation, a second operation, and a third operation are performed by the method according to one or more embodiments, the first operation, the second operation, and the third operation may all be performed by the first processor, or the first operation and the second operation may be performed by the first processor 170, and the third operation may be performed by the second processor 170.

One or more processors may be implemented as a single core processor 170 including one core, or may be implemented as one or more multicore processors 170 including multiple cores (e.g., a homogeneous multicore or a heterogeneous multicore). When one or more processors are implemented as a multi-core processor, each of the plurality of cores included in the multi-core processor may include an internal processor memory such as cache memory and on-chip memory, and a common cache shared by the plurality of cores may be included in the multi-core processor. In addition, each of the plurality of cores (or some of the plurality of cores) included in the multi-core processor may independently read and execute a program command for implementing the method according to one or more embodiments of the present disclosure, or all (or some) of the plurality of cores may be linked to read and execute the program command for implementing the method according to one or more embodiments of the present disclosure.

When the method according to one or more embodiments of the present disclosure includes a plurality of operations, the plurality of operations may be performed by one of the plurality of cores included in the multi-core processor, or may be performed by the plurality of cores. For example, when the first operation, the second operation, and the third operation are performed by the method according to one or more embodiments, the first operation, the second operation, and the third operation may all be performed by a first core included in the multi-core processor, or the first operation and the second operation may be performed by the first core included in the multi-core processor, and the third operation may be performed by a second core included in the multi-core processor.

In the embodiments of the present disclosure, the processor 170 may mean a system on chip (SoC) in which one or more processors and other electronic components are integrated, a single core processor, a multi-core processor, or a core included in the single core processor or the multi-core processor. Here, the core may be implemented as the CPU, the GPU, the APU, the MIC, the DSP, the NPU, the hardware accelerator, the machine learning accelerator, etc., but the embodiments of the present disclosure are not limited thereto.

Operations of the processor 170 to implement various embodiments of the present disclosure may be implemented through a plurality of modules.

Specifically, data for the plurality of modules according to the present disclosure may be stored in the memory 110, and the processor 170 may access the memory 110 to load the data for the plurality of modules into the memory or buffer within the processor 170, and then implement various embodiments of the present disclosure using the plurality of modules.

However, at least one of the plurality of modules according to the present disclosure may be implemented as hardware and included in the processor 170 in the form of the system on chip.

Alternatively, at least one of the plurality of modules according to the present disclosure may be implemented as a separate external apparatus, and the electronic apparatus 100 and each module may perform communication and perform the operation according to the present disclosure.

According to one or more embodiments of the present disclosure, the processor 170 may control the operation of the electronic apparatus 100 as described with reference to the drawings below. In this case, the processor 170 may control at least one of the components of the electronic apparatus 100 so that the electronic apparatus 100 performs each operation.

Hereinafter, the operation of the processor 170 according to the present disclosure will be described in detail with reference to the attached drawings.

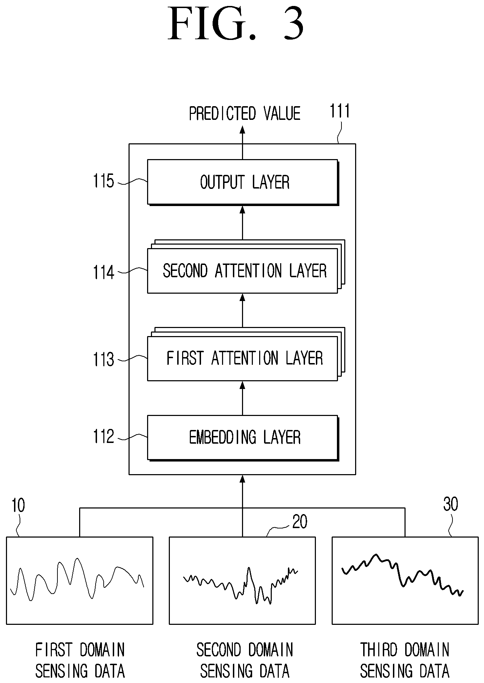

FIG. 3 is a diagram for describing a structure of an artificial intelligence (AI) model according to one or more embodiments of the present disclosure.

The AI model 111 of the present disclosure may include an embedding layer 112, a first attention layer 113, a second attention layer 114, and an output layer 115.

The embedding layer 112 may embed data input to the embedding layer 112 to output an embedding vector. Here, the embedding may refer to an operation of mapping high-dimensional data to a low-dimensional vector space. In other words, the embedding layer may output an embedding vector including the features of the input data.

In this disclosure, the term "embedding layer" may be replaced with an expression representing the same or similar concept, such as the "input layer."

In this disclosure, the term "embedding vector" may be replaced with an expression representing the same or similar concept, such as "embedding," "feature vector," or "feature."

The electronic apparatus 100 may divide the time-series data, such as sensing data 10, 20, and 30, into plurality of segments based on a plurality of time intervals.

Here, the sensing data may be the sensing data sensing the motion of the apparatus or the sensing data sensing the user's heart rate.

In the present disclosure, the "time interval" may be replaced with expressions representing the same or similar concepts, such as "window size," "interval," and "frame size."

In this case, the first sensing data 10, the second sensing data 20, and the third sensing data 30 may each belong to different domains. That is, the domain of the sensing data may correspond to the type of apparatus collecting the sensing data.

In this case, sensing data sensed by a first type of apparatus may belong to a first domain, sensing data sensed by a second type of apparatus may belong to a second domain, and sensing data sensed by a third type of apparatus may belong to a third domain.

That is, the first domain may correspond to the sensing data sensed by the first type of apparatus, the second domain may correspond to the sensing data sensed by the second type of apparatus, and the third domain may correspond to the sensing data sensed by the third type of apparatus.

According to one or more embodiments of the present disclosure, the first type of apparatus may refer to a smartphone, the second type of apparatus may refer to a smartwatch, and the third type of apparatus may refer to earphones, but the present disclosure is not limited thereto.

Meanwhile, the domain of the sensing data may correspond to the type of data sensed by the sensor.

For example, sensing data sensing the motion of the apparatus in the first type of apparatus may belong to the first domain, and the sensing data sensing the user's heart rate in the first type of apparatus may belong to the second domain. The sensing data sensing the motion of the apparatus in the second type of apparatus may belong to the third domain.

The electronic apparatus 100 may input a plurality of divided segments to the embedding layer 112 to obtain a plurality of embedding vectors. In this case, the embedding vector may include the features of the plurality of segments.

Meanwhile, according to one or more embodiments of the present disclosure, the electronic apparatus 100 may input three pieces of sensing data to the AI model 111 as illustrated in FIG. 3, but this is merely an example, and the electronic apparatus 100 may input less than three pieces of sensing data or more than three pieces of sensing data to the AI model 111.

In the present disclosure, the attention layer may refer to a layer that outputs the correlation between the input data.

In the present disclosure, "correlation" may be replaced with expressions of identical or similar concepts, such as "correlation," "attention," "association," "relevance," "interrelationship," "dependency," or "interdependency."

The first attention layer 113 may output a time-series correlation between the input data.

Specifically, when the first attention layer 113 receives embedding vectors of plurality of segments of a specific domain, the first attention layer 113 may output the time-series correlation between the plurality of embedding vectors.

That is, when the first attention layer 113 receives the plurality of embedding vectors corresponding to sensing data acquired from a specific sensor, the first attention layer 113 may output the time-series correlation between the plurality of embedding vectors.

In the present disclosure, the first attention layer 113 may be implemented as a multi-head attention structure in which a plurality of self-attention layers are stacked.

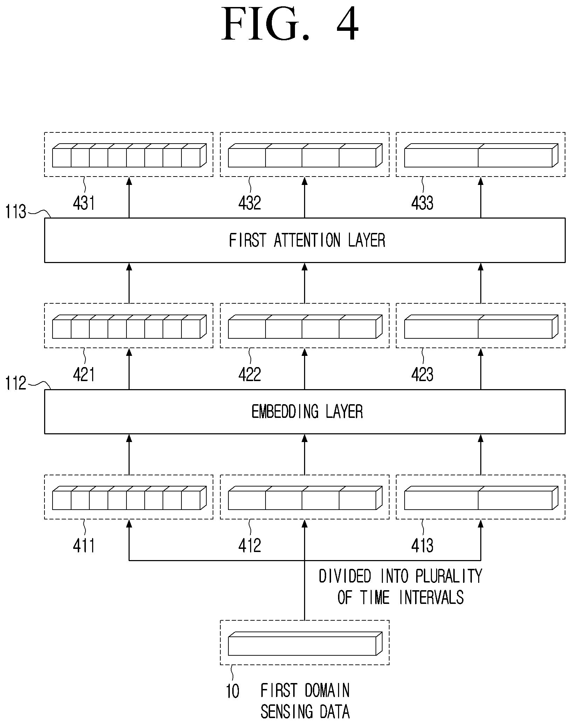

For example, as illustrated in FIG. 4, the electronic apparatus 100 may divide the sensing data 10 of the first domain, which is time-series data, into a first time interval (e.g., 1-second interval) to acquire a plurality of first segments 410. In addition, the electronic apparatus 100 may divide the sensing data 10 of the first domain into a second time interval (e.g., 2-second interval) to acquire a plurality of second segments 412. In addition, the electronic apparatus 100 may divide the time-series data 10 of the first domain into a third time interval (e.g., 4-second interval) to acquire a plurality of third segments 413.

The electronic apparatus 100 may input the plurality of first segments 411, the plurality of second segments 412, and the plurality of third segments 413 to the embedding layer 112 to acquire embedding vectors 421, 422, and 423 of each segment.

The electronic apparatus may input the plurality of first embedding vectors 421 corresponding to the plurality of first segments 411 to the first attention layer 113 to acquire a first attention vector 431 including the correlation between the plurality of first embedding vectors 421, and input the plurality of second embedding vectors 422 to the first attention layer 113 to acquire a second attention vector 432 including the correlation between the plurality of second segments 412. In addition, the electronic apparatus 100 may input the plurality of third embedding vectors 423 to the first attention layer 113 to acquire a third attention vector 433 including the correlation between the plurality of third embedding vectors 423.

In this case, the electronic apparatus 100 may sequentially input each of the plurality of first embedding vectors 421, the plurality of second embedding vectors 422, and the plurality of third embedding vectors 423 to the first attention layer 113, but is not limited thereto.

Specifically, when the plurality of first embedding vectors 421 are input, the first attention layer 113 may output the correlation between the plurality of first embedding vectors 421. When the plurality of second embedding vectors 422 are input, the first attention layer 113 may output the correlation between the plurality of second embedding vectors 422.

That is, when the plurality of first embedding vectors 421 are input, the first attention layer 113 may output a first correlation between a first embedding vector among the plurality of first embedding vectors 421 and each of the plurality of first embedding vectors 421, a second correlation between a second embedding vector among the plurality of first embedding vectors 421 and each of the plurality of first embedding vectors 421, ..., an n-th correlation between an n-th embedding vector among the plurality of first embedding vectors 421 and each of the plurality of first embedding vectors 421.

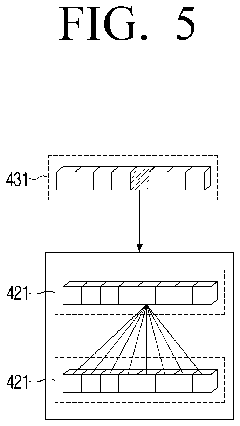

For example, as illustrated in FIG. 5, the first attention vector 431 may include information on the correlation between one of the plurality of first embedding vectors 421 and a vector 510 and each of the plurality of first embedding vectors 421.

The electronic apparatus 100 may perform the same operation as the operation for the first sensing data 20 for each of the second sensing data 20 belonging to the second domain and the third sensing data 30 belonging to the third domain.

Accordingly, the electronic apparatus 100 may acquire an attention vector including information on the correlation between the embedding vectors of the second sensing data 20. In addition, the electronic apparatus 100 may include an attention vector including the information on the correlation between the embedding vectors of the third sensing data 30.

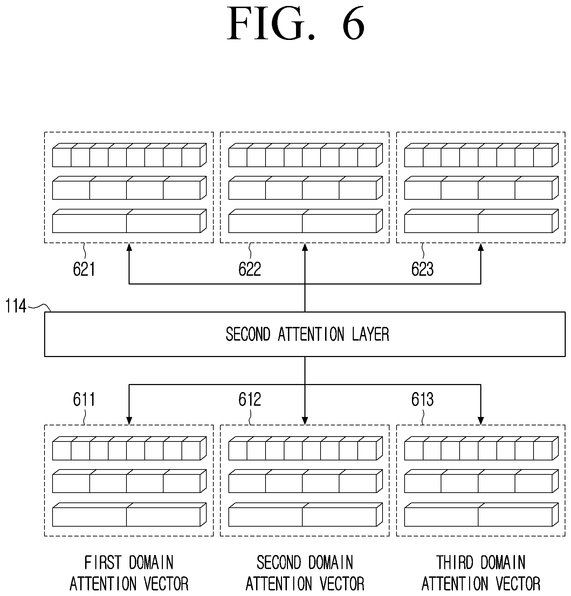

Referring to FIG. 6, the electronic apparatus 100 may input outputs 611, 612, and 613 of the first attention layer to the second attention layer 114.

Here, the outputs 611, 612, and 613 of the first attention layer 113 may include an attention vector 611 in which the first sensing data 10 belonging to the first domain is output through the embedding layer 112 and the first attention layer 113, an attention vector 612 in which the second sensing data 20 belonging to the second domain is output through the embedding layer 112 and the first attention layer 113, and an attention vector 613 in which the third sensing data 30 belonging to the third domain is output through the embedding layer 112 and the first attention layer 113.

The second attention layer 114 may receive the outputs of the first attention layer 113 for each of plurality of domains and output the correlation between the plurality of domains.

In this case, the second attention layer 114 may be implemented as a multi-head attention structure in which the plurality of attention layers overlap.

Specifically, the second attention layer 114 may output a correlation between an embedding vector corresponding to a specific time interval in a specific domain among the plurality of domains and embedding vectors of other domains.

Alternatively, the second attention layer 114 may output a correlation between an attention vector corresponding to a specific time interval in a specific domain among the plurality of domains and attention vectors of other domains.

Specifically, when the first attention vector of the first domain, the second attention vector of the second domain, and the third attention vector of the third domain are input, the second attention layer 114 may output a correlation between a plurality of first embedding vectors of the first domain, a plurality of second embedding vectors of the second domain, and a plurality of third embedding vectors of the third domain.

Alternatively, when the first attention vector of the first domain, the second attention vector of the second domain, and the third attention vector of the third domain are input, the second attention layer 114 may output a correlation between an attention vector of the first domain, an attention vector of the second domain, and an attention vector of the third domain.

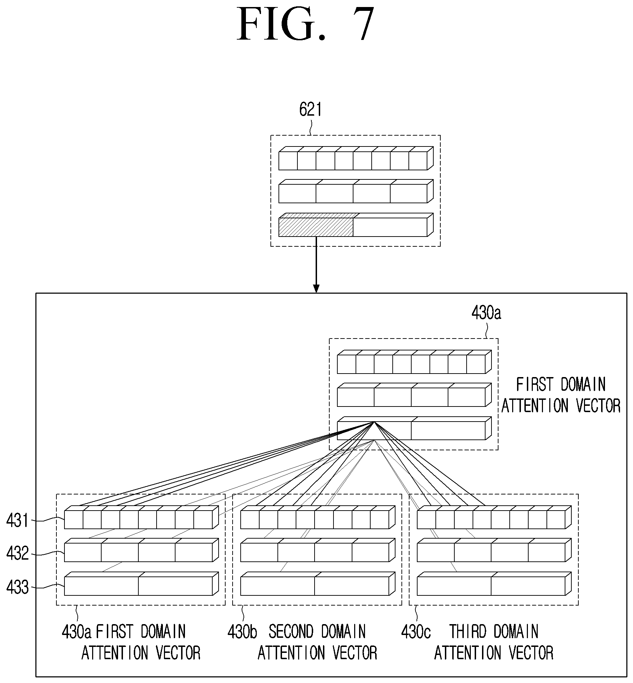

For example, as illustrated in FIG. 7, the output 621 of the second attention layer may include a correlation between an embedding vector 430a of the first domain and embedding vectors 430a, 430b, and 430c of the plurality of domains.

In this case, when a time interval corresponding to a specific embedding vector of the first domain is 0 to 4 seconds, the output 621 of the second attention layer may include a correlation between a specific embedding vector of the first domain and each of the corresponding embedding vectors within 0 to 4 seconds in the plurality of domains, but is not limited thereto.

Referring back to FIG. 3, the electronic apparatus 100 may input the output of the second attention layer 114 to the output layer 115.

When data is input, the output layer 115 may output a preset type of data. Here, the preset type of data may refer to data for estimating the user's posture. That is, the output layer 115 may output data for estimating a user's posture.

In this case, as described above, the estimated user's posture may refer to positions of user's major joints (elbows, shoulders, knees, or neck), user's gait evaluation metrics, a user's posture state, a user's motion state, or a user's gait state, but is not limited thereto.

According to one or more embodiments of the present disclosure, the output layer 115 may output user's gait evaluation metrics.

Alternatively, the output layer 115 may output a position of a user's major joints. In addition, the electronic apparatus 100 may acquire the user's gait evaluation metrics by using the positions of the user's major joints.

According to one or more embodiments of the present disclosure, the gait evaluation metrics may be a metric for the user's gait measure.

Specifically, the output layer 115 may output a metric for the user's gait measure. Here, a metric for the gait measure may be a metric for evaluating a user's gait posture.

In the present disclosure, as described above, the gait evaluation metrics may include at least one of walking symmetry, arm swing magnitude, stride time, stance time, swing time, step time, stride length, step length, gait speed, and gait variability.

For example, the output layer 115 may output the metric representing the walking symmetry. The symmetry metric may be expressed as a value between 0 and 1. The closer the symmetry metric is to 1, the higher the symmetry.

Alternatively, the output layer 115 may output a metric representing an arm swing magnitude during walking. The metric representing the arm swing magnitude may be a value estimated in units of degrees of arm swing.

Alternatively, the output layer 115 may output a metric representing a stride during walking. The metric representing the stride may be an estimated value representing a distance taken per step during walking.

Alternatively, the output layer 115 may output a metric representing cadence during walking. The metric representing the cadence may be an estimated value representing the gait speed during walking.

Alternatively, the output layer 115 may output metric representing a double support time during walking. The metric representing the double support time may be an estimated value representing the time it takes for both feet to touch the ground simultaneously during walking.

Meanwhile, the output layer 115 may output various metrics for the user's gait measure in addition to the metrics described above. Furthermore, the output layer 115 may output one or more of the above-described metrics together.

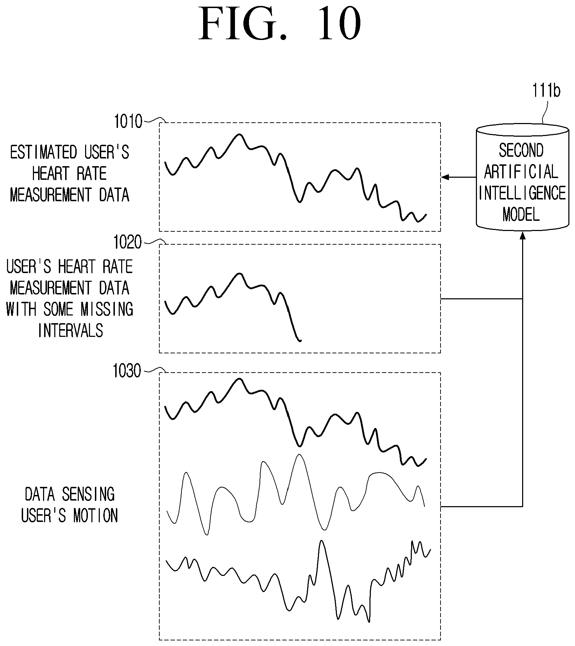

The electronic apparatus 100 of the present disclosure may acquire data to evaluate the user's posture by comparing the above-described gait evaluation metrics with reference data. This will be described in detail later with reference to FIG. 10.

Meanwhile, the AI model 111 that has learned the time-series correlation and the inter-domain correlation of embedding vectors may estimate output data using the embedding vectors with a high correlation with the output data.

Meanwhile, in the present disclosure, the electronic apparatus 100 is described as inputting the output of the first attention layer 113 to the second attention layer 114. However, this is merely an example. The electronic apparatus 100 may also input the output of the embedding layer 112 to the second attention layer 114 and the output of the second attention layer 114 to the first attention layer. Thereafter, the electronic apparatus 100 may input the output of the first attention layer to the output layer 115.

Alternatively, the first attention layer 113 and the second attention layer 114 may be configured in parallel. In this case, the electronic apparatus 100 may input the output of the embedding layer 112 to each of the first attention layer 113 and the second attention layer 114, and may acquire the attention vector by performing a concatenation operation on the outputs of the first attention layer 113 and the second attention layer 114. Furthermore, the electronic apparatus 100 may input the acquired attention vector to the output layer 115.

As described above, the electronic apparatus 100 of the present disclosure may identify the embedding vectors highly correlated with the output of the output layer 115 through the trained AI model 111, and estimate the user's posture using the identified embedding vectors.

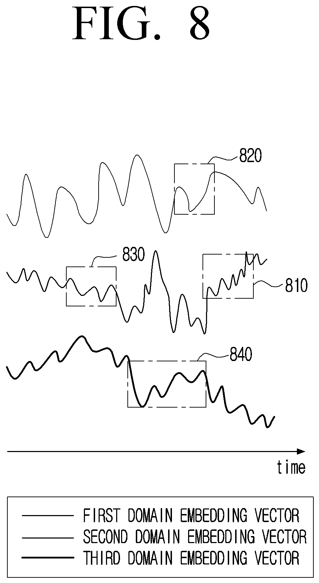

Referring to FIG. 8, the AI model 111 of the present disclosure may estimate output data using embedding vectors 810, 820, 830, and 840 whose correlation values with the output data are greater than or equal to a preset first value.

In this case, the correlation values between the embedding vectors 810, 820, 830, and 840 may also be greater than or equal to a second value.

The information on the above-described preset first value and preset second value may be stored in the memory 110.

Since the electronic apparatus 100 according to the present disclosure acquires the plurality of embedding vectors by embedding the plurality of pieces of sensing data according to the plurality of time intervals, the time intervals of embedding vectors with the high correlation with the output data may vary by domain, as illustrated in FIG. 8.

That is, the electronic apparatus 100 according to the present disclosure may estimate output data using an embedding vector of a time interval optimized for each domain. Accordingly, the electronic apparatus 100 may estimate the user's posture more accurately and efficiently.

Furthermore, the electronic apparatus 100 may train the AI model 111 to minimize the difference between the output data output by the output layer and the labeled data in the sensing data. Here, the labeled data may be data regarding the user's posture measured through a separate sensor attached to the user's body while the training data acquisition data is being acquired.

In this case, the loss function representing the difference between the output data and the labeled data may be implemented in the form of a cross-pitch function, but is not limited thereto.

In this case, the electronic apparatus 100 may train weights of at least one of the embedding layer 112, the first attention layer 113, the second attention layer 114, and the output layer 115 using the loss function.

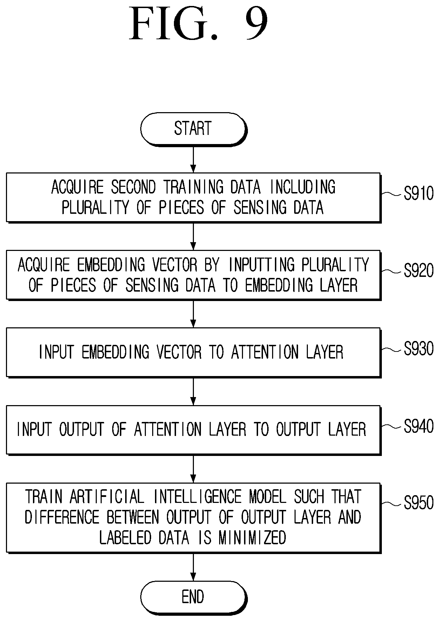

The operation of the electronic apparatus 100 training the AI model 111 will be described with reference to FIG. 9.

FIG. 9 is a flowchart illustrating a method for the electronic apparatus 100 to train the AI model 111 according to one or more embodiments of the present disclosure.

Referring to FIG. 9, the electronic apparatus 100 may acquire training data including the plurality of pieces of sensing data (S910).

The training data may include the plurality of pieces of sensing data that sense the motions of each of the plurality of apparatuses while the user carrying the plurality of apparatuses moves. For example, the training data may include sensing data from a smartphone, a smartwatch, and earphones that sense the motions of the apparatuses for 180 seconds.

Furthermore, the training data may include the sensing data that senses the user's heart rate. For example, the training data may include the sensing data from the smartwatch that senses the user's heart rate for 180 seconds.

The training data may include the sensing data belonging to the plurality of domains. As described above, the domain may correspond to the type of apparatus that senses the sensing data. Furthermore, the sampling rate at which the plurality of pieces of sensing data are sensed may vary by domain.

Furthermore, the training data may be labeled data regarding the user's posture measured while the plurality of pieces of sensing data are sensed. In this case, the labeled data may be the type of data that the AI model 111 intends to output. For example, the data labeled in the training data may be one of the metrics for gait measurement. For example, the metric for gait measurement may be at least one of the metric representing the symmetry during walking, the metric representing the arm swing magnitude during walking, the metric representing the stride length during walking, the metric representing the gait speed during walking, and the metric representing the double support time during walking.

Furthermore, the electronic apparatus 100 may train the AI model 111 to learn the time-series correlation between the sensing data in the specific domain using the training data.

Specifically, the electronic apparatus 100 may divide each of the plurality of pieces of sensing data into the plurality of segments based on the plurality of time intervals and input the divided segments to the embedding layer 112 to acquire the embedding vector (S920).

The electronic apparatus 100 may input the embedding vector to the attention layer (S930).

Specifically, the electronic apparatus 100 may input the embedding vector into the first attention layer 113 to acquire the vector including the time-series correlation between the embedding vectors within the specific domain. Furthermore, the electronic apparatus 100 may input the vector output from the first attention layer 113 to the second attention layer 114 to acquire the vector including the correlation between the embedding vectors from different domains.

The electronic apparatus 100 may input the output of the attention layer to the output layer (S940).

Furthermore, the electronic apparatus 100 may train the AI model 111 so that, when the training data is input to the AI model 111, the difference between the output of the output layer 115 and the labeled data in the training data is minimized (S950).

Accordingly, the electronic apparatus 100 may train the weights of at least one of the embedding layer 112, the first attention layer 113, the second attention layer 114, and the output layer 115.

Accordingly, the first attention layer 113 may be trained to output the time-series correlation in a specific domain.

The second attention layer 114 may be trained to output the correlation between the domains. That is, the second attention layer 114 may be trained to output the correlation between the embedding vectors from different domains.

Meanwhile, the attention layer according to the present disclosure may learn to output the correlation between the output value of the output layer 115 and the embedding vector.

Meanwhile, the electronic apparatus 100 according to the present disclosure may increase the number of training data by data augmentation of the acquired training data and train the AI model 111 using the increased number of training data.

Meanwhile, the electronic apparatus 100 according to the present disclosure may delete some of the training data and train the AI model 111 using the training data from which some of the training data has been deleted. Compared to the training data, sensing data acquired in a real environment may have problems with missing sensing data in some time intervals for various reasons. The electronic apparatus 100 according to the present disclosure trains the AI model 111 by deleting data corresponding to some time intervals from the training data. Therefore, even when the sensing data with missing time intervals is acquired, the electronic apparatus 100 may estimate the user's posture with high accuracy.

Furthermore, even when the electronic apparatus 100 acquires user's heart rate sensing data with some time intervals missing, the electronic apparatus 100 may estimate the user's heart rate with high accuracy.

Referring to FIG. 10, the heart rate sensor is sensitive to the user's motion, and thus, the problem of missing the user's heart rate sensing data while the user is exercising may occur.

In this case, the electronic apparatus 100 inputs user's heart rate data 1020 with some missing time intervals and the sensing data 1030 detecting the user's motion into the second AI model 111b, thereby allowing the electronic apparatus 100 to estimate the user's heart rate data 1010 in the missing time intervals. In other words, the electronic apparatus 100 may estimate the user's heart rate data in the missing time intervals through the second AI model 111b. The second AI model 111b may be stored in the memory 110. Meanwhile, the AI model 111 described with reference to FIGS. 1 to 9 may be referred to as the first AI model.

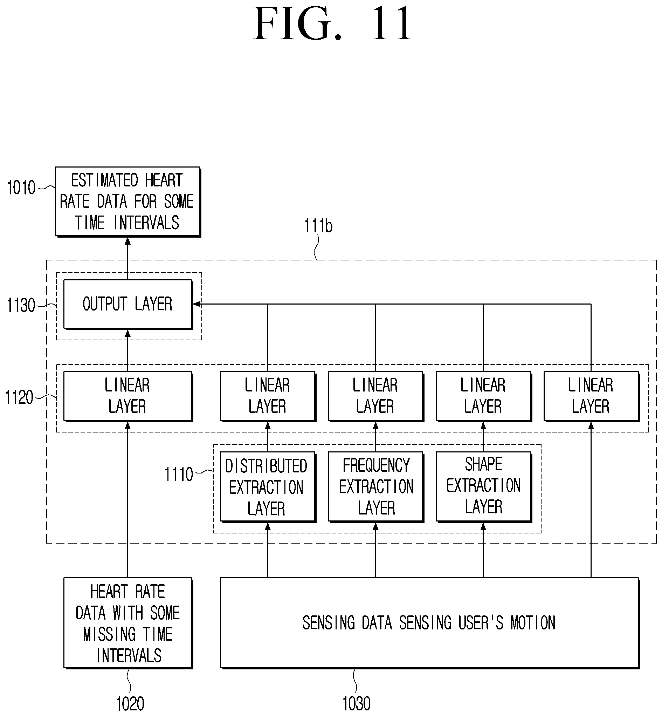

FIG. 11 is a diagram illustrating a second AI model according to one or more embodiments of the present disclosure.

Referring to FIG. 11, the second AI model 111b may include plurality of first layers 1110 for extracting features of the user's motion from sensing data 1030 that senses the user's motion. In this case, the features of the user's motion may be variance, frequency, and shape.

That is, the second AI model 111b may include a layer for measuring variance from the motion detection data. The variance represents the degree to which the apparatus's motion changes and may be an important factor for predicting the user's heart rate.

In this case, the window size for inputting the sensing data sensing the user's motion to the neural network to measure the variance may vary from 1 second to 60 seconds. Here, the window size may refer to the time interval during which the sensing data sensing the user's motion is measured. For example, when the window size is 2 seconds, the electronic apparatus 100 may input the sensing data sensing the user's motion from 4 to 6 seconds to the neural network. Accordingly, the electronic apparatus 100 may detect the variance of the user's motion from various aspects.

The second AI model 111b may include a layer for detecting the frequency of the user's motion.

In this case, the layer for detecting the frequency may use linear-frequency cepstrum coefficients (LFCC) derived from the short-time Fourier transform method.

The second AI model 111b may include a layer for detecting the shape of the user's motion.

Since the user's wrist motion often exhibits irregular and unique patterns at the beginning or end of exercise, utilizing the shape of the user's motion may more accurately predict the user's heart rate than using only the magnitude or frequency of the motion.

In this case, the layer for detecting the shape of the user's motion may process data sensed from the user's motion using SincNet that is a deep learning architecture that may be used for voice recognition.

The second AI model 111b may include a plurality of second layers 1120 that estimate the missing value of the heart rate sensing value when the user's motion features are input. Here, each of the plurality of second layers may be a linear layer. Furthermore, the second AI model 111b may include the plurality of second layers 1120 that estimate the missing value of the heart rate sensing value when the heart rate data with missing time intervals is input. In this case, each of the plurality of second layers 1120 may receive the heart rate data, one of the features of the user's motion, and data sensing the user's motion.

Furthermore, the second AI model 111b may include a third layer 1130 that estimates missing values of heart rate sensing values when the outputs of the plurality of second layers 1120 are input. In this case, the third layer 1130 may be an ensemble layer that combines the outputs of the plurality of second layers 1120 to perform more accurate predictions.

Therefore, the electronic apparatus 100 of the present disclosure may accurately estimate the user's heart rate. That is, the electronic apparatus 100 may compensate for missing or noisy sensing values due to the user's motion, such as sensing values from a heart rate sensor, using the sensor that senses the user's motion.

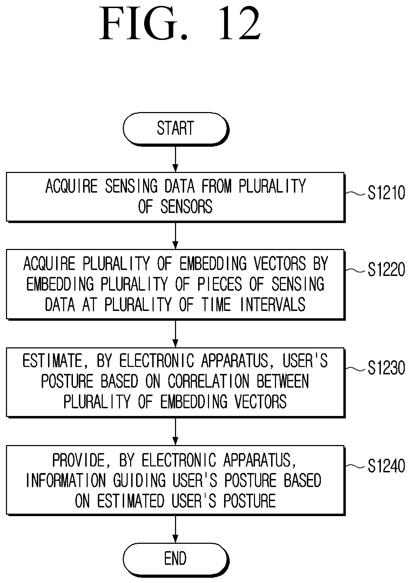

FIG. 12 is a flowchart for describing a method for an electronic apparatus to guide a user's posture using an AI model according to one or more embodiments of the present disclosure.

Referring to FIG. 10, the electronic apparatus 100 may acquire the plurality of pieces of sensing data from the plurality of sensors (S1210).

For example, the plurality of pieces of sensing data may include at least one of first sensing data sensing the motion of the electronic apparatus 100, second sensing data sensing the motion of the first external apparatus 200, third sensing data sensing the motion of the second external apparatus 300, and fourth sensing data sensing the user's heart rate by the first external apparatus 200.

The electronic apparatus 100 may embed the plurality of pieces of sensing data according to the plurality of time intervals to acquire the plurality of embedding vectors (S1220). That is, the electronic apparatus 100 may divide each of the plurality of pieces of sensing data into the plurality of segments based on the plurality of time intervals and input the divided segments to the embedding layer 112 to acquire the embedding vector.

Based on the correlation between the plurality of embedding vectors, the electronic apparatus 100 may estimate the user's posture (S1230).

Specifically, the electronic apparatus 100 may input the plurality of embedding vectors to the first attention layer 113 and input the output value of the first attention layer 113 to the second attention layer 114.

The electronic apparatus 100 may estimate the user's posture by inputting the output value of the second attention layer 114 to the output layer.

Specifically, the electronic apparatus 100 may input the output value of the second attention layer 114 to the output layer 115 to acquire the data regarding the user's posture.

In the present disclosure, the data regarding the user's posture may be data regarding the metric for the user's gait measure.

Based on the estimated user's posture, the electronic apparatus 100 may provide information guiding the user's posture or motion (S1240).

According to one or more embodiments of the present disclosure, the electronic apparatus 100 may acquire information indicating the state of the user's posture or motion by comparing the estimated user's posture with reference data. That is, the electronic apparatus 100 may acquire information evaluating the quality of the user's posture or motion by comparing the reference data with the output of the AI model 111.

Here, the reference data may include information on at least one of the following: the symmetry during walking, the magnitude of arm swing during walking, the stride during walking, the gait speed, the double support time during walking, and the reference heart rate.

That is, the reference data may include information on at least one reference value of the symmetry during walking, the magnitude of arm swing during walking, the stride during walking, the gait speed, the double support time during walking, and the heart rate.

In this case, the electronic apparatus 100 may compare the reference data with the estimated posture and classify the user's posture or motion (e.g., walking motion) as "good," "average," "bad," or "dangerous."

Alternatively, the electronic apparatus 100 may acquire a value (e.g., 0 to 10) indicating the degree of suitability of the user's posture or motion (e.g., walking motion) by comparing the reference data with the estimated posture. Meanwhile, the reference data may be determined based on the information on the user. Here, the information on the user may include at least one of the user's age, gender, height, weight, body fat percentage, and BMI.

Specifically, the electronic apparatus 100 may compare the reference data with the metric for the user's gait measure. In this case, the electronic apparatus 100 may identify the degree to which each evaluation metric is close to a reference value.

Here, the reference value may be the average value of each evaluation metric. For example, when the user of the electronic apparatus 100 is a male in his 20s, the preset value may be the average value of each evaluation metric measured for males in their 20s.

Alternatively, the reference value may be an ideal value of each evaluation metric. For example, the ideal value of the metric representing the symmetry may be 1. Furthermore, the ideal value of the metric representing the double support time may be 0.

The electronic apparatus 100 may evaluate the quality of the user's posture or motion as higher as the metric for the user's gait measure approaches the reference value. For example, the electronic apparatus 100 may classify the user's posture or motion as "good." Alternatively, the electronic apparatus 100 may evaluate the suitability of the user's posture or motion as approaching "10."

According to one or more embodiments of the present disclosure, the electronic apparatus 100 may acquire information to evaluate the quality of the user's posture or motion by comparing the metric representing the user's motion or posture with the reference data. However, this is merely an example, and the operation of comparing the metric representing the motion or posture with the reference data may also be performed on the output layer of the AI model 111. In this case, the electronic apparatus 100 may directly acquire information to evaluate the quality of the user's motion or posture from the output of the AI model 111.

According to one or more embodiments of the present disclosure, the electronic apparatus 100 may provide information guiding the user's posture or motion based on at least one of the user's current exercise intensity, the current state of the user's posture or motion, the current heart rate of the user, and the information on the user.

According to one or more embodiments of the present disclosure, when the user's exercise intensity is determined to be greater than a preset value, the electronic apparatus 100 may provide information guiding the user to reduce the exercise intensity.

For example, when the difference between the user's heart rate (the reference heart rate included in the reference data and the estimated user's heart rate) is greater than or equal to a threshold, the electronic apparatus 100 may provide information guiding the user to reduce the intensity (or speed) of the motion.

For example, when the difference between the acquired value representing the walking symmetry and the reference value is greater than or equal to a threshold, the electronic apparatus 100 may provide information guiding the user to reduce the intensity (or speed) of the motion.

For example, when the user's exercise intensity is greater than or equal to a first preset value, but the value representing the user's posture or the appropriateness of the motion state is greater than or equal to a second preset value, the user's heart rate is within a preset range, and the user's age is less than or equal to a preset age, the electronic apparatus 100 may provide information guiding the user to maintain the intensity (or speed) of the motion.

According to one or more embodiments of the present disclosure, the information provided by the electronic apparatus 100 may include information guiding the user to maintain the current motion, information guiding the user to reduce the intensity of the current motion, or information guiding the user to increase the intensity of the current motion. Alternatively, the information guided by the electronic apparatus 100 may include information recommending a more suitable action (or exercise) for the user.

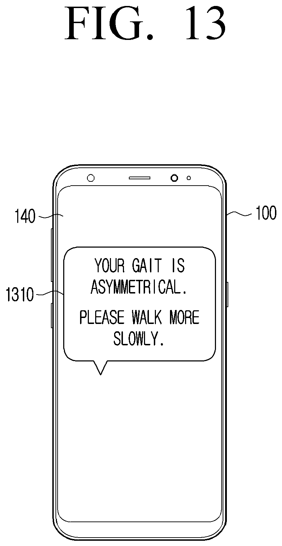

For example, as illustrated in FIG. 13, the electronic apparatus 100 may display text 1110 such as "Your left-right symmetry is unbalanced when walking. Walk more slowly" on the display 140.

Alternatively, the electronic apparatus 100 may output audio, such as "Your left-right symmetry is unbalanced when walking. Walk more slowly," through the speaker 150.

According to one or more embodiments of the present disclosure, the electronic apparatus 100 may identify whether the acquired sensing data satisfies a preset condition, and when the condition is satisfied, estimate the user's posture and provide information to guide the user's motion.

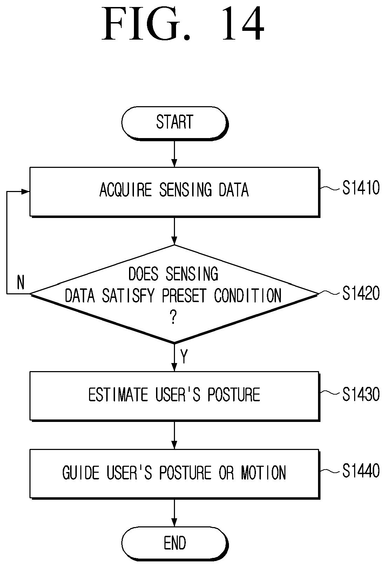

FIG. 14 is a flowchart for describing a method for an electronic apparatus 100 to estimate a user's posture based on whether acquired sensing data satisfies a condition according to one or more embodiments of the present disclosure.

Referring to FIG. 14, the electronic apparatus 100 may acquire the sensing data from the plurality of sensors (S1410). In this case, the operation of S1210 may be the same as the operation of S910.

The electronic apparatus 100 may identify whether the acquired sensing data satisfies the preset condition (S1420).

Here, the preset condition may be a condition in which the similarity between the pattern of the sensing data and the preset pattern is greater than or equal to a threshold.

Alternatively, the preset condition may be a condition in which the difference between the pattern of the sensing data and the preset pattern is less than a preset value.

Alternatively, the preset condition may be a condition in which the time at which the sensing data is acquired is greater than or equal to a preset time.

Alternatively, the preset condition may be a condition in which the sensing data from the specific domain is acquired. For example, the preset condition may be a condition in which the sensing data sensed through earphones is acquired.

Alternatively, the preset condition may be a condition in which the plurality of conditions described above are satisfied together.

When the sensing data does not satisfy the preset condition (S1220-N), the electronic apparatus 100 may continue to acquire the sensing data (S1410).

When the sensing data satisfies the preset condition (S1420-Y), the electronic apparatus 100 may input the sensing data to the AI model to estimate the user's posture (S1430).

In this case, the user's posture estimated by the electronic apparatus 100 may vary depending on the satisfied condition.

Specifically, when the first condition (e.g., sensing data received from a smartwatch) is satisfied, the electronic apparatus 100 may estimate the first posture (e.g., hand amplitude) among the user's postures. Furthermore, when the second condition (e.g., sensing data received through earphones) is satisfied, the electronic apparatus 100 may estimate the second posture (e.g., gait symmetry) among the user's postures.

Based on the estimated user's posture, the electronic apparatus 100 may provide guidance information to guide the user's posture or motion (S1440).

In the present disclosure, the electronic apparatus 100 may provide information in various ways.

According to one or more embodiments of the present disclosure, the electronic apparatus 100 may control the display 140 to display a screen including information.

According to one or more embodiments of the present disclosure, the electronic apparatus 100 may control the speaker 150 to output audio including information.

According to one or more embodiments of the present disclosure, the electronic apparatus 100 may transmit data for outputting a screen including information or audio to a user terminal apparatus via the communication interface 120. Based on the received data, the user terminal apparatus may output a screen including information or audio.

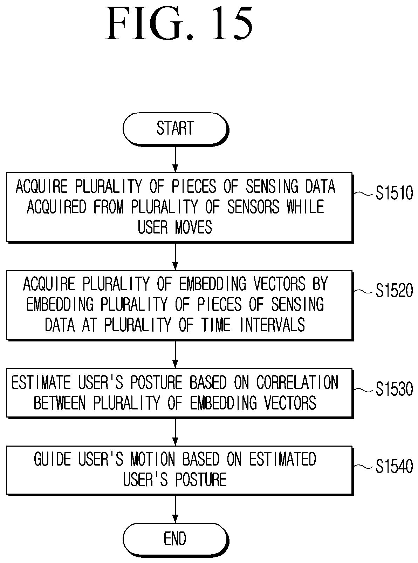

FIG. 15 is a flowchart illustrating a method for controlling an electronic apparatus 100 according to one or more embodiments of the present disclosure.

Referring to FIG. 15, the electronic apparatus 100 may acquire the plurality of pieces of sensing data from the plurality of sensors while the user is moving (S1510).

In this case, each of the plurality of sensors may sense the plurality of pieces of sensing data at a different sampling rate.

The plurality of sensors may be an acceleration sensor.

The electronic apparatus 100 may embed the plurality of pieces of sensing data according to the plurality of time intervals to acquire the plurality of embedding vectors (S1520).

Among the plurality of embedding vectors, the first embedding vector may correspond to the first time interval, and the second embedding vector may correspond to the second time interval different from the first time interval.

The electronic apparatus 100 may estimate the user's posture based on the correlation between the plurality of embedding vectors (S1530).

Meanwhile, the electronic apparatus 100 may identify whether the plurality of pieces of sensing data satisfy the preset condition.

When the plurality of pieces of sensing data satisfy the preset condition, the electronic apparatus 100 may estimate the user's posture corresponding to the condition.

Specifically, the electronic apparatus 100 may estimate the user's posture using at least one of the plurality of embedding vectors whose correlation with the user's posture is equal to or greater than a preset value.

Each of the plurality of pieces of sensing data may correspond to each of the plurality of domains.

The electronic apparatus 100 may acquire the correlation between the embedding vectors belonging to the same domain among the plurality of domains.

The electronic apparatus 100 may acquire the correlation between the embedding vectors belonging to different domains among the plurality of domains.

The electronic apparatus 100 may guide the user's motion based on the estimated user's posture (S1540).

Specifically, the electronic apparatus 100 may guide the user's motion by comparing the estimated user's posture with the reference data. In this case, the reference data may be determined based on the user's age and gender.

Although various embodiments have been described above, each embodiment is not necessarily implemented individually, and may be implemented together in a single product by being combined in whole or in part with at least one other embodiment.

Meanwhile, terms "~er/or" or "module" used in the present disclosure may include units configured by hardware, software, or firmware, and may be used compatibly with terms such as, for example, logics, logic blocks, components, circuits, or the like. The "unit" or "module" may be an integrally configured component or a minimum unit performing one or more functions or a part thereof. For example, the module may be configured by an application-specific integrated circuit (ASIC).

Various embodiments of the present disclosure may be implemented by software including instructions stored in a machine-readable storage medium (for example, a computer-readable storage medium). A machine is an apparatus capable of calling a stored instruction from a storage medium and operating according to the called instruction, and may include the electronic apparatus 100 of the disclosed embodiments. In a case where a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

According to one or more embodiments, the methods according to various embodiments disclosed in the present disclosure may be included in a computer program product and provided. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

Each of the components (for example, modules or programs) according to the diverse embodiments may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

## Claims

1. A control method of an electronic apparatus, comprising:
acquiring a plurality of pieces of sensing data acquired from a plurality of sensors while a user moves;
acquiring a plurality of embedding vectors by embedding the plurality of pieces of sensing data at a plurality of time intervals;
estimating a posture of the user based on correlations among the plurality of embedding vectors; and
guiding a motion of the user based on the estimated posture of the user.

2. The control method as claimed in claim 1, wherein, in the estimating of the posture of the user, the posture of the user is estimated using at least one embedding vector, among the plurality of embedding vectors, having a value indicating a degree of correlation with the posture of the user being greater than or equal to a preset value.

3. The control method as claimed in claim 1, wherein, among the plurality of embedding vectors, a first embedding vector corresponds to a first time interval, and a second embedding vector corresponds to a second time interval different from the first time interval.

4. The control method as claimed in claim 1, further comprising:
training an artificial intelligence model to learn the correlation between the piece of sensing data acquired from the plurality of sensors.

5. The control method as claimed in claim 1, wherein each of the plurality of pieces of sensing data corresponds to a plurality of domains, and
the control method includes:
acquiring correlations between embedding vectors belonging to the same domain among the plurality of domains; and
acquiring a correlation between embedding vectors belonging to different domains among the plurality of domains.

6. The control method as claimed in claim 1, further comprising:
determining whether the plurality of pieces of sensing data satisfy a preset condition; and
estimating the posture of the user corresponding to the condition when the plurality of pieces of sensing data satisfy the preset condition.

7. The control method as claimed in claim 1, wherein, in the guiding of the motion of the user, the estimated posture of the user compares with reference data to guide the motion of the user, and
the reference data is determined based on an age and gender of the user.

8. The control method as claimed in claim 1, wherein each of the plurality of sensors senses the plurality of pieces of sensing data at a different sampling rate.

9. The control method as claimed in claim 1, wherein the plurality of sensors are at least one of an acceleration sensor, a gyroscope sensor, and a geomagnetic sensor.

10. An electronic apparatus, comprising:
a sensor detecting a motion of the electronic apparatus;
a communication interface;
a memory; and
a processor,
wherein the processor is configured to acquire a plurality of pieces of sensing data acquired from a plurality of sensors including the sensor while a user moves;
acquire a plurality of embedding vectors by embedding the plurality of pieces of sensing data at a plurality of time intervals;
estimate a posture of the user based on correlations among the plurality of embedding vectors; and
guide a motion of the user based on the estimated posture of the user.

11. The electronic apparatus as claimed in claim 10, wherein the processor is configured to estimate the posture of the user using at least one embedding vector, among the plurality of embedding vectors, having a value indicating a degree of correlation with the posture of the user being greater than or equal to a preset value.

12. The electronic apparatus as claimed in claim 10, wherein, among the plurality of embedding vectors, a first embedding vector corresponds to a first time interval, and a second embedding vector corresponds to a second time interval different from the first time interval.

13. The electronic apparatus as claimed in claim 10, wherein the processor is configured to train an artificial intelligence model to learn a correlation between the pieces of sensing data acquired from the plurality of sensors.

14. The electronic apparatus as claimed in claim 10, wherein each of the plurality of pieces of sensing data corresponds to a plurality of domains, and
the processor is configured to acquire a correlation between embedding vectors belonging to the same domain among the plurality of domains, and
acquire a correlation between embedding vectors belonging to different domains among the plurality of domains.

15. The electronic apparatus as claimed in claim 10, wherein the processor is configured to determine whether the plurality of pieces of sensing data satisfy a preset condition, and
estimate the posture of the user corresponding to the condition when the plurality of pieces of sensing data satisfy the preset condition.
